**Europäisches Patentamt**

**European Patent Office**

**Office européen des brevets**

(19)

(11) Veröffentlichungsnummer: **0 088 093**
**B1**

(12) # EUROPÄISCHE PATENTSCHRIFT

(45) Veröffentlichungstag der Patentschrift:
**08.01.86**

(51) Int. Cl.⁴: **B 60 K 20/16,** B 60 K 41/10,
F 16 H 5/60

(21) Anmeldenummer: **82902672.3**

(22) Anmeldetag: **07.09.82**

(86) Internationale Anmeldenummer:
**PCT/DE 82/00182**

(87) Internationale Veröffentlichungsnummer:
**WO 83/01042** (31.03.83 Gazette 83/8)

(54) **VERFAHREN UND VORRICHTUNG ZUR STEUERUNG EINES UNTER LAST SCHALTBAREN GETRIEBES.**

(30) Priorität: **16.09.81 DE 3136725**

(43) Veröffentlichungstag der Anmeldung:
**14.09.83 Patentblatt 83/37**

(45) Bekanntmachung des Hinweises auf die Patenterteilung:
**08.01.86 Patentblatt 86/2**

(84) Benannte Vertragsstaaten:
**DE FR GB**

(56) Entgegenhaltungen:
**DE - A - 2 539 285**
**DE - A - 2 931 744**
**DE - B - 2 066 040**
**FR - A - 2 074 100**
**FR - A - 2 139 531**

(73) Patentinhaber: **ROBERT BOSCH GMBH, Postfach 50,
D-7000 Stuttgart 1 (DE)**

(72) Erfinder: **ESCHRICH, Gerhard, Steinbeissstrasse 34,
D-7016 Gerlingen (DE)**
Erfinder: **MÜLLER, Alfred, Innsbruckerstrasse 63,
D-8031 Gröbenzell (DE)**
Erfinder: **SAUER, Joseph, Frankenstrasse 28,
D-7141 Schwieberdingen (DE)**
Erfinder: **SCHREIBER, Achim, Frankenstrasse 34,
D-7141 Schwieberdingen (DE)**

# Beschreibung

## Stand der Technik

Die Erfindung geht aus von einem Verfahren nach der Gattung des Anspruchs 1 bzw. einer Vorrichtung nach der Gattung des Anspruchs 2.

Bei bekannten Automatikgetrieben werden bei definierten Motorlast- (Gaspedalstellung) und Fahrgeschwindigkeitskombinationen Gangwechsel vorgenommen. In einer elektronischen Getriebesteuerung sind diese Schaltpunkte als Schaltkennlinien fest programmiert. Die reibschlüssigen Elemente, wie Kupplungen oder Bremsen, die zum Durchführen der Schaltung gelöst bzw. geschlossen werden, werden im allgemeinen hydraulisch betätigt. Der Druck in den reibschlüssigen Elementen, der dem jeweiligen Motormoment angepasst sein soll, darf nicht zu klein werden, da dann die Schleifzeit, also die Zeit, während der die den Reibschluss bewirkenden Teile der Elemente aufeinander gleiten, zu gross wird. Verschleiss und Erwärmung würden zu hoch werden, was zu einer Zerstörung der Reibelemente führt. Andererseits darf der Druck nicht zu gross werden, da sonst der Fahrkomfort wegen eines zu starken Schaltrucks leidet. Aus der DE-A-2931744 ist ein Verfahren und eine Vorrichtung zur Steuerung eines unter Last schaltbaren Stufengetriebes bekannt, bei dem die Betätigungskraft der reibschlüssig arbeitenden Elemente von einer hydraulischen Anordnung, die vier Druckstufen erzeugt, eingestellt wird. Nachteilig bei dieser bekannten Anordnung ist, dass die Druckanpassung nur in Bereichen erfolgt, so dass sie ungenau sein kann.

## Vorteile der Erfindung

Diese Nachteile werden durch das erfindungsgemässe Verfahren mit den kennzeichnenden Merkmalen des Anspruchs 1 bzw. die erfindungsgemässe Vorrichtung mit den kennzeichnenden Merkmalen des Anspruchs 2 gelöst mit dem Vorteil, dass für jeden Schaltpunkt der richtige Druck eingestellt wird und die Schleifzeit für alle Schaltpunkte konstant bleibt. Die Schaltungen verlaufen optimal bezüglich Verschleiss und Komfort.

Durch die in den untergeordneten Ansprüchen aufgeführten Massnahmen ergeben sich vorteilhafte Weiterbildungen und zusätzliche Verbesserungen des im Anspruch 1 definierten Verfahrens bzw. der im Anspruch 2 und Anspruch 7 definierten Vorrichtung. Durch die besondere Ausführung der Stufen- und Regelschieber sind für die Betätigung aller reibschlüssigen Elemente nur zwei Druckregler notwendig.

## Zeichnung

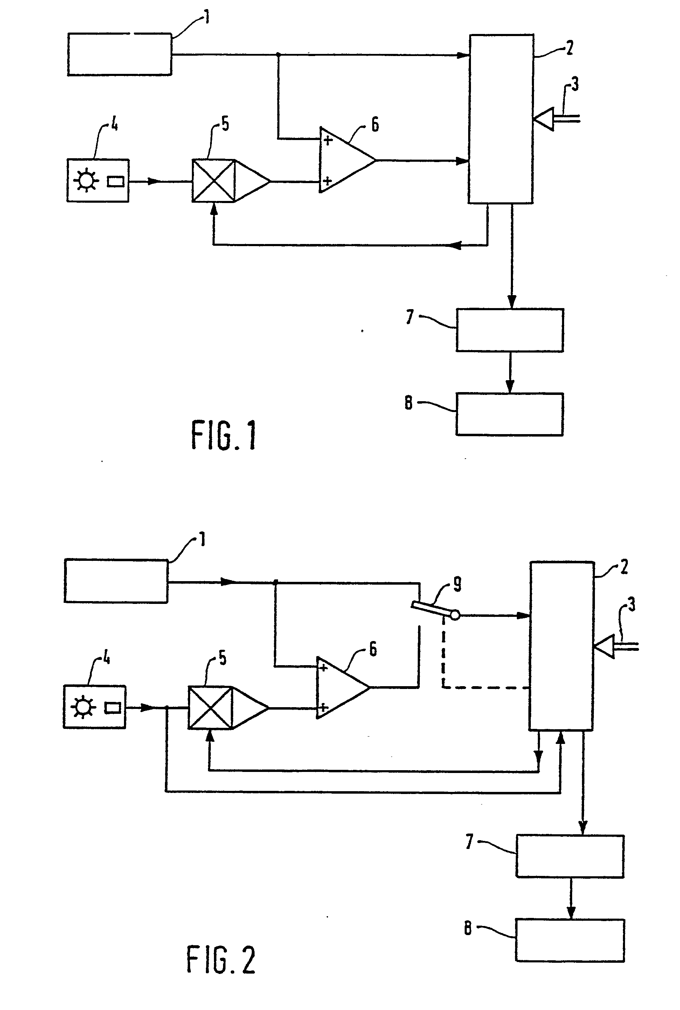

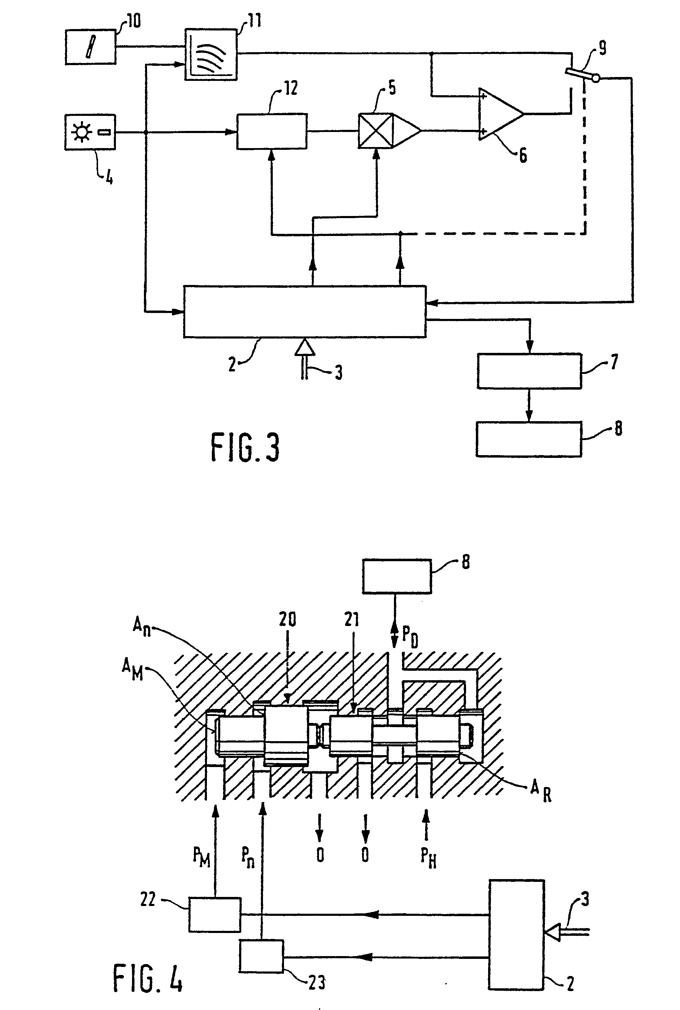

Die erfindungsgemässe Vorrichtung ist in der Zeichnung dargestellt und wird in der nachfolgenden Beschreibung näher erläutert. Es zeigen Fig. 1 bis 3 drei schaltungsgemässe Ausbildungen der erfindungsgemässen Vorrichtung und Fig. 4 einen Schnitt durch eine Hydraulikvorrichtung zur Erzeugung unterschiedlicher Drücke, die auf die Betätigungsglieder der reibschlüssigen Elemente gegeben werden.

## Beschreibung der Ausführungsbeispiele

Selbsttätig schaltbare Getriebe in Kraftfahrzeugen umfassen einen von einer Brennkraftmaschine des Fahrzeuges angetriebenen hydrodynamischen Wandler (oder Kupplung), dem mindestens zwei Umlaufrädergetriebesätze nachgeschaltet sind, die durch Kupplungen oder Bremsen wahlweise in den Kraftfluss zwischen Brennkraftmaschine und Abtrieb des Getriebes bzw. der Antriebsachse des Fahrzeuges einschaltbar sind. Zum Betätigen dieser reibschlüssigen Elemente, die den Schaltvorgang bewirken, also die einen Getriebeelemente aus- und andere Getriebeelemente in den Kraftfluss einschalten, dienen Betätigungsglieder in Gestalt von Elektromagneten oder, bevorzugt, Hydraulikarbeitskolben. Die Kraftwirkung, die diese Hydraulikarbeitskolben entfalten, hängt ab von dem Druck in der sie speisenden Leitung.

Es wird davon ausgegangen, dass das Motormoment (Antriebsmoment) während des Gangwechsels konstant ist. Das Moment am Abtrieb ändert sich im Verhältnis der Übersetzungsänderung. Man kann annehmen, dass sich die Fahrgeschwindigkeit (Abtriebsdrehzahl) während des Schaltvorganges praktisch nicht ändert. Bei Beginn einer Hochschaltung fällt das Abtriebsmoment stark ab. Anschliessend steigt das Abtriebsmoment wieder an, da aufgrund der geänderten Übersetzung zwischen Antrieb und Abtrieb ein zusätzliches Drehmoment übertragen werden muss, um die Dralländerung der mit dem Getriebeeingang verbundenen sich drehenden Massen zu erhalten. Das Abtriebsmoment bleibt dann eine bestimmte Zeit lang konstant und springt am Schluss des Schaltvorganges, z.B. bei einer Hochschaltung, in den direkten Gang auf die Grösse des Motormoments herab. Die Motordrehzahl bzw. Getriebeeingangsdrehzahl beginnt zum Zeitpunkt des Wiederanstieges des Abtriebsmomentes linear abzufallen und erreicht bei Ende des Schaltvorganges die Abtriebsdrehzahl.

Die Zeit, in der die Motordrehzahl abfällt, wird im folgenden als Schleifzeit bezeichnet. Der Druck zur Betätigung der reibschlüssigen Elemente, wie Kupplungen und Bremsen, ist nun dadurch bestimmt, dass während des Schaltvorganges von den reibschlüssigen Elementen das Motormoment (Antriebsmoment) und das Moment zum Abbremsen (Zughochschaltung) bzw. Beschleunigen des Motors (Schubrückschaltung), das durch die aus der Dralländerung des Motors frei werdende oder dafür aufzubringende Energie bestimmt ist, übertragen werden muss. Die Schleifzeit soll für jeden Gangwechsel konstant sein, so dass bei hoher Motordrehzahl ein grösserer Druck aufgebracht werden muss als bei kleiner. Der Druck an den reibschlüssigen Elementen wird daher bestimmt zu:

$$p \sim M_{Motor} + k \cdot n_{Motor}$$

wobei k eine vom Schaltungsfall abhängige empirisch bestimmte Konstante ist. Dieser Druck an den reibschlüssigen Elementen wird durch die erfindungsgemässe Vorrichtung bei jedem Schaltungsfall eingestellt, so dass immer eine richtige Druckanpassung erfolgt.

In Fig. 1 ist eine Einrichtung zur Bestimmung des Motormomentes 1 mit einer Getriebesteuereinheit 2 verbunden. Die Getriebesteuereinheit 2 kann hydraulisch, digital, analog ausgebildet sein wie zum Beispiel in der DE-C Nr. 2050918 oder kann mit Microprozessor entsprechend der DE-A Nr. 2938268 aufgebaut sein. Sie erhält als Eingangssignale ausserdem die durch den Pfeil 3 angedeuteten weiteren üblichen Eingangsgrössen wie Abtriebsdrehzahl, Abtriebsmoment, Kick-Down-Schalter, Positionsschalter usw. Der Ausgang eines Motordrehzahlgebers 4 ist mit einem Eingang einer Multipliziereinrichtung 5 verbunden. Ein weiterer Eingang der Multipliziereinrichtung 5 ist an die Getriebesteuereinheit 2 angeschlossen, die den konstanten Faktor k liefert.

Der Ausgang der Multipliziereinrichtung 5 führt auf eine Summiereinrichtung 6, deren weiterer Eingang mit dem Ausgang des Motordrehzahlgebers 4 verbunden ist. Der Ausgang der Summiereinrichtung 6 ist mit der Getriebesteuereinheit 2 verbunden. Ein Ausgang der Getriebesteuereinheit 2 führt auf einen Druckregler 7, der die reibschlüssigen Elemente 8 ansteuert.

Das Signal, das von dem Motordrehzahlgeber 4 abgegeben wird, wird in der Multipliziereinrichtung 5 mit dem dem Faktor k entsprechenden Signal multipliziert und der Summiereinrichtung 6 zugeführt. Der Faktor k wird je nach Schaltungsfall von der Getriebesteuereinheit 2 neu bestimmt und ausgegeben. In der Summiereinrichtung 6 wird zu dem Ausgang der Multipliziereinrichtung 5 das motormomentabhängige Signal hinzuaddiert und der Getriebesteuereinheit 2 zugeführt. Die Getriebesteuereinheit 2 steuert abhängig von dem Signal den Druckregler 7 an, der den entsprechenden Druck für die Betätigung der reibschlüssigen Elemente 8 liefert.

Das Ausführungsbeispiel in Fig. 2 unterscheidet sich von dem Ausführungsbeispiel aus Fig. 1 dadurch, dass der Ausgang des Drehzahlgebers 4 ausser mit der Multipliziereinrichtung 5 auch mit der Getriebesteuereinheit 2 verbunden ist. Ausserdem wird abhängig von einem Schalter 9 entweder der Ausgang der Einrichtung zur Bestimmung des Drehmoments 1 oder der Ausgang der Summiereinrichtung 6 an die Getriebesteuereinheit 2 angeschlossen. Der Schalter 9 wird in Abhängigkeit von einem von der Getriebesteuereinheit 2 gelieferten Signal gesteuert.

Bei Beginn des Schaltungsvorganges wird der Schalter 9 von der Getriebesteuereinheit 2 in der Weise gesteuert, dass der Ausgang der Summiereinrichtung 6 mit der Getriebesteuereinheit 2 verbunden ist. Am Ende des Schaltvorganges, wenn die Synchrondrehzahl d.h. im direkten Gang die Abtriebsdrehzal erreicht ist, verbindet der Schalter 9 den Ausgang der Einrichtung zur Bestimmung des Motordrehmomentes 1 mit der Getriebesteuereinheit 2, und das einfache Motormoment wird für die Druckanpassung verwendet. Um den exakten Zeitpunkt der Antriebsdrehzahländerung (Motordrehzahländerung) bei Beginn des Schaltvorganges zu erhalten, wird das motordrehzahlabhängige Signal der Getriebesteuereinheit 2 zugeführt, dort differenziert und für die Steuerung des Schalters 9 ausgewertet.

In Fig. 3 ist ein weiteres Ausführungsbeispiel dargestellt, wobei gleichwirkende Teile die gleichen Bezugsziffern wie in Fig. 1 und Fig. 2 haben. Die Getriebesteuereinheit 2 soll hier als Rechnereinrichtung ausgeführt sein. Eine Einrichtung zur Bestimmung der Motorlast 10 ist mit einem Festwertspeicher 11 verbunden, dessen Ausgang einerseits an die Summiereinrichtung 6 und andererseits über den Schalter 9 an die Getriebesteuereinheit 2 angeschlossen ist. Der Ausgang des Drehzahlgebers 4 ist den Festwertspeicher 11, an eine Speichereinrichtung, die als Sample and Hold-Schaltung 12 ausgebildet ist und an die Getriebesteuereinheit 2 angeschlossen. Der Ausgang der Sample and Hold-Schaltung 12 führt auf die Multipliziereinrichtung. Die Sample and Hold-Schaltung 12 wird von dem Ausgang der Getriebesteuereinheit 2, der das Signal für den Zeit-Schaltzeitpunkt beinhaltet, angesteuert.

Die Einrichtung zur Bestimmung der Motorlast 10 kann den Lastzustand über die Drosselklappenstellung, den Ansaugdruck oder über einen Luftmengenmesser erfassen. In dem Festwertspeicher 11 ist das Motorkennfeld eingespeichert, aus dem mit Hilfe der Motordrehzahl das tatsächliche Motormoment bestimmt werden kann. Das motordrehzahlabhängige Signal, das von dem Drehzahlgeber 4 geliefert wird, wird laufend in die Sample and Hold-Schaltung 12 eingelesen. Zu Beginn des Schaltvorganges wird von der Getriebesteuereinheit 2 ein Signal auf den Hold-Eingang gegeben, durch das der momentane drehzahlabhängige Wert festgehalten wird. Entsprechend den Ausführungsbeispielen aus Fig. 1 und 2 wird dieser Wert mit dem Faktor k in der Multipliziereinrichtung 5 multipliziert und anschliessend mit dem drehmomentabhängigen Signal aufsummiert. Damit ergibt sich die druckbestimmende Grösse für die reibschlüssigen Elemente 8. Bei Beendigung des Schaltungsvorganges wird die Sample and Hold-Schaltung 12 zurückgesetzt, der jeweilige drehzahlabhängige Wert wieder eingelesen und der Schalter 9 in die Stellung geschaltet, die den Ausgang des Festwertspeichers 11 mit dem motormomentabhängigen Signal mit der Getriebesteuereinheit 2 verbindet.

In Fig. 4 ist die hydraulische Anordnung zur Erzeugung des Drucks entsprechend dem erfindungsgemässen Verfahren dargestellt. Die Anordnung umfasst einen Stufenschieber 20 und einen Regelschieber 21, wobei dem Stufenschieber 20 zwei Druckregler 22, 23 vorgeschaltet sind. Die Druckregler 22, 23 werden jeweils von einem motormomentabhängigen Signal und einem motordrehzahlabhängigen Signal, die über die Getriebesteuereinheit 2 geliefert werden, angesteuert. Der Druckregler 22 liefert einen motormomentabhängigen Druck $p_M$, der auf die Fläche $A_M$ wirkt, während der Druckregler 23 einen motordrehzahlabhängigen Druck $p_n$ liefert, der auf die Ringfläche $A_n$ des Stufenschiebers 20 wirkt. Die auf die Flächen

$A_M$ und $A_n$ wirkenden Drücke $p_M$, $p_n$ erzeugen eine Kraft, die den Stufenschieber 20 in Richtung auf den Regelschieber 21 verschieben möchte. Dem gegenan wirkt eine Kraft, die durch den auf die Fläche $A_R$ des Regelschiebers 21 wirkenden Drosseldruck $p_D$ erzeugt wird. Der Drosseldruck steuert die reibschlüssigen Elemente 8 an. Entsprechend der Verschiebung des Regelschiebers 21 öffnet oder schliesst seine Steuerkante die Hauptdruckleitung mit dem Druck $p_H$, so dass ein Kräftegleichgewicht eintreten kann. Sind die Flächen $A_M$, $A_n$, $A_R$ gleich, so ergibt sich der Drosseldruck, als Summe aus dem Druck $p_M$ und $p_n$. Falls die Flächen unterschiedlich gross sind, ergibt sich der Drosseldruck aus der Summe des Produktes aus dem Flächenverhältnis $A_M$ zu $A_R$ un $p_M$ und des Produktes aus dem Flächenverhältnis $A_n$ zu $A_R$ und $p_n$. Haben die reibschlüssigen Elemente 8 alle das gleiche Stützmoment, so kann für jedes reibschlüssige Element der gleiche Stufen- und Regelschieber verwandt werden. Treten unterschiedliche Stützmomente auf, so kann gleiche Regelschieber 21 verwandt werden, während der Stufenschieber 20 jeweils über die Flächen $A_M$ und $A_n$ an die jeweiligen Stützmomente angepasst wird.

Ein etwaiger in allen Betriebsfällen konstanter Anteil, der z.B. durch den Fülldruck in den Kupplungen gegeben sein kann, kann durch den Einsatz einer Druckfeder auf der Seite des Stufenschiebers 20 berücksichtigt werden.

Im vorliegenden Fall umfassen die Eingangsgrössen 3 der Getriebesteuereinheit 2 auch die Signale für die Motordrehzal, die durch einen Drehzahlgeber geliefert werden kann und die Motorlast, die aus der Einspritzmenge, der Drosselklappenstellung, der Gaspedalstellung oder des Saugrohrunterdrucks bestimmt werden kann.

Die Druckregler 22, 23, die die drehzahl- bzw. motormomentabhängigen Signale direkt in einen entsprechenden Druck umsetzen, können auch durch Magnetventile ersetzt werden. Ein 3/2-Magnetventil benötigt im Gegensatz zum Druckregler ein impulsdauermoduliertes Signal zur Druckbildung. Ein 3/3-Magnetventil wurde die Kombination aus einem 3/2- und 2/2-Magnetventil; dieses wird zwar ebenfalls taktend angesteuert, arbeitet jedoch in seiner Haltestellung quasistatisch und ist weitgehend verlustfrei.

## Patentansprüche

1. Verfahren zur Steuerung eines unter Last schaltbaren Stufengetriebes eines von einer Brennkraftmaschine angetriebenen Kraftfahrzeuges, bei dem zum Umschalten reibschlüssige Elemente (8), wie druckmittelbetätigte Kupplungen oder Bremsen, gelöst bzw. geschlossen werden, dadurch gekennzeichnet, dass bei allen Schaltungsfällen der hydraulische Druck auf die reibschlüssigen Elemente (8) bei konstanter Schleifzeit proportional zur Summe aus Motormoment und dem Produkt aus Motordrehzahl und einem konstanten Faktor eingestellt wird, wobei der konstante Faktor abhängig von der Schleifzeit und dem Schaltungsfall ist.

2. Vorrichtung zur Durchführung des Verfahrens nach Anspruch 1 mit einer Getriebesteuereinheit (2), die Stellglieder zum Betätigen der reibschlüssigen Elemente (8) ansteuert, und einer Einrichtung (1) zur Bestimmung des Motormoments, deren Signal der Getriebesteuereinheit (2) zugeführt wird, dadurch gekennzeichnet, dass ein Motordrehzahlgeber (4) vorgesehen ist, dessen Ausgangssignal in einer Multipliziereinrichtung (5) mit dem von der Getriebesteuereinheit (2) abgegebenen dem konstanten Faktor entsprechenden Signal multipliziert wird, dass eine Summiereinrichtung (6) zur Addition des Ausgangssignals der Multipliziereinrichtung (5) mit dem Motormomentensignal vorgesehen ist und dass die Getriebesteuereinheit (2) abhängig vom Ausgangssignal der Summiereinrichtung (6) die Stellglieder (7) ansteuert.

3. Vorrichtung nach Anspruch 2, dadurch gekennzeichnet, dass ein Umschalter (9) vorgesehen ist, der zu Beginn des Schaltvorganges den Ausgang der Summiereinrichtung (6) und am Ende des Schaltvorganges den Ausgang der Einrichtung zur Bestimmung des Motormomentes (1) mit der Getriebesteuereinheit (2) verbindet, die abhängig vom jeweiligen Signal die Stellglieder (7) ansteuert.

4. Vorrichtung nach Anspruch 3, dadurch gekennzeichnet, dass der Motordrehzahlgeber (4) mit der Getriebesteuereinheit (2) verbunden ist, die abhängig vom Drehzahlsignal den Umschalter (9) steuert.

5. Vorrichtung nach einem der Ansprüche 2 bis 4, dadurch gekennzeichnet, dass während des Schaltvorganges das von der Motordrehzahl abhängige Eingangssignal der Multipliziereinrichtung (5) konstant gehalten wird.

6. Vorrichtung nach Anspruch 5, dadurch gekennzeichnet, dass eine Speichereinrichtung (12) vorgesehen ist, die das Motordrehzahlsignal zu Beginn des Schaltvorganges speichert und während des Schaltvorganges dieses gespeicherte Signal der Multipliziereinrichtung (5) zuführt.

7. Vorrichtung nach Anspruch 2, dadurch gekennzeichnet, dass die Stellglieder als Druckregler (22, 23) und als eine Kraft auf einen Regelschieber (21) ausübende Stufenschieber (20) ausgebildet sind, wobei die Stufenflächen ($A_M$, $A_n$) des Stufenschiebers (20) mit einem von den Druckreglern (22, 23) einstellbaren motordrehzahlabhängigen und motormomentabhängigen Druck ($p_n$, $p_M$) beaufschlagt sind.

8. Vorrichtung nach Anspruch 7, dadurch gekennzeichnet, dass bei gleichen reibschlüssigen Elementen zwei Druckregler (22, 23), ein Stufenschieber (20) und ein Regelschieber vorgesehen sind.

9. Vorrichtung nach Anspruch 7, dadurch gekennzeichnet, dacs bei ungleichen reibschlüssigen Elementen zwei Druckregler (22, 23) und mehrere Stufen- und Regelschieber (20, 21) vorgesehen sind, wobei die Stufenflächen der Stufenschieber (20) entsprechend den Stützmomenten an den reibschlüssigen Elementen (8) und die Regelschieber (21) alle gleich ausgebildet sind.

## Revendications

1. Procédé de commande sous charge d'une boîte de vitesses d'un véhicule à moteur entraîné par un moteur à combustion interne, selon lequel, lors du changement de vitesse, on desserre ou on serre des éléments (8) de liaison par frottement tels que des embrayages ou freins commandés par un fluide sous pression, caractérisé en ce que, pour tous les cas de changement de vitesse, la pression hydraulique exercée sur les éléments (8) de liaison par frottement, à durée de frottement constante, est réglée proportionnellement à la somme du couple moteur et du produit de la vitesse de rotation du moteur par un coefficient constant, le coefficient constant étant indépendant de la durée de frottement et du cas de changement de vitesse.

2. Dispositif pour la mise en œuvre du procédé selon la revendication 1 à l'aide d'une unité de commande de boîte de vitesses (2), qui commande des organes de réglage pour manœuvrer les éléments de liaison par frottement (8) et un dispositif (1) pour déterminer le couple du moteur, dont le signal est appliqué à l'unité de commande de boîte de vitesses (2), caractérisé en ce qu'il est prévu un capteur de vitesse de rotation du moteur (4) dont le signal de sortie est multiplié dans une installation de multiplication (5) avec un coefficient constant fourni par l'unité de commande de boîte de vitesses (2), en ce qu'il est prévu une installation d'addition (6) pour additionner le signal de sortie de l'installation de multiplication (5) avec le signal du couple du moteur, et en ce que l'unité de commande de boîte de vitesses (2) commande les organes de réglage (7) en fonction du signal de sortie de l'installation d'addition (6).

3. Dispositif selon la revendication 2, caractérisé en ce qu'il est prévu un commutateur (9) qui, au début du changement de vitesse, relie la sortie de l'installation d'addition (6) à l'unité de commande de boîte de vitesses (2) et qui à la fin de l'opération de changement de vitesse relie la sortie de l'installation pour déterminer le couple moteur (1) à l'unité de commande de boîte de vitesses (2), celle-ci commandant les organes de réglage (7) en fonction du signal correspondant.

4. Dispositif selon la revendication 3, caractérisé en ce que le capteur de vitesse de rotation du moteur (4) est relié à l'unité de commande de boîte de vitesses (2) qui commande le commutateur (9) en fonction du signal de vitesse de rotation.

5. Dispositif selon l'une des revendications 2 à 4, caractérisé en ce que, pendant le changement de vitesse, on maintient constant le signal d'entrée dépendant de la vitesse de rotation du moteur pour l'installation de multiplication (5).

6. Dispositif selon la revendication 5, caractérisé en ce qu'il est prévu une installation de mémoire (12) qui enregistre en mémoire le signal de vitesse de rotation du moteur au début du changement de vitesse et applique ce signal mis en mémoire à l'installation de multiplication (5) pendant l'opération de changement de vitesse.

7. Dispositif selon la revendication 2, caractérisé en ce que les organes de réglage sont constitués par des régulateurs de pression (22, 23) et un tiroir à niveaux (20) exerçant une force sur un tiroir de réglage (21), les surfaces des niveaux ($A_M$, $A_n$) du tiroir à niveaux (20) étant soumises à une pression ($p_n$, $p_M$) réglable par des régulateurs de pression (22, 23) et dépendant du couple du moteur et de la vitesse de rotation du moteur.

8. Dispositif selon la revendication 7, caractérisé en ce que, pour les mêmes éléments de liaison par frottement, il y a deux régulateurs de pression (22, 23), un tiroir à niveaux (20) et un tiroir de réglage.

9. Dispositif selon la revendication 7, caractérisé en ce que, pour des éléments de liaison par friction non identiques, on a deux régulateurs de pression (22, 23) et plusieurs tiroirs à niveaux et tiroirs de réglage (20, 21), les surfaces des niveaux des tiroirs à niveaux (20) étant réalisées en fonction des couples d'appui sur les éléments de liaison par friction (8) et les tiroirs de réglage (21) étant tous identiques.

## Claims

1. Method for controlling a multi-step transmission, which can be stepped under load, of a motor vehicle driven by an internal combustion engine, in which method frictionally engaged elements (8) such as pressure-medium-actuated clutches or brakes are disengaged or engaged for changing gears, characterised in that, in all gear-changing cases, the hydraulic pressure on the frictionally engaged elements (8) is adjusted proportionally to the sum of motor torque and the product of motor speed and a constant factor, with constant slipping time, the constant factor being dependent on the slipping time and the gear-changing case.

2. Device for carrying out the method according to Claim 1, comprising a transmission control unit (2), which drives final control elements for actuating the frictionally engaged elements (8), and a device (1) for determining the motor torque, the signal of which device is fed to the transmission control unit (2), characterised in that a motor speed pickup (4) is provided, the output signal of which is multiplied in a multiplying device (5) by the signal which is supplied by the transmission control unit (2) and corresponds to the constant factor, that a summing device (6) is provided for adding the output signal of the multiplying device (5) to the motor torque signal and that the transmission control unit (2) drives the final control elements (7) in dependence on the output signal of the summing device (6).

3. Device according to Claim 2, characterised in that a change-over switch (9) is provided which, at the beginning of the gear-changing process, connects the output of the summing device (6) to the transmission control unit (2) and at the end of the gear-changing process connects the output of the device for determining the motor torque (1) to the transmission control unit (2) which drives the final control elements (7) in dependence on the respective signal.

4. Device according to Claim 3, characterised in that the motor speed pickup (4) is connected to the transmission control unit (2) which controls the change-over switch (9) in dependence on the speed signal.

5. Device according to one of Claims 2 to 4, characterised in that, during the gear-changing process, the motor-speed-dependent input signal of the multiplying device (5) is kept constant.

6. Device according to Claim 5, characterised in that a storage device (12) is provided which stores the motor speed signal at the beginning of the gear-changing process and during the gear-changing process supplies this stored signal to the multiplying device (5).

7. Device according to Claim 2, characterised in that the final control elements are constructed as pressure controllers (22, 23) and as a multi-step slide valve (20), which exerts a force on a control slide valve (21), in which arrangement the step phases ($A_M$, $A_n$) of the multi-step slide valve (20) have applied to them a motor-speed-dependent and motor-torque-dependent pressure ($p_n$, $p_M$) which can be adjusted by the pressure controllers (22, 23).

8. Device according to Claim 7, characterised in that, with identical frictionally engaged elements, two pressure controllers (22, 23), one multi-step slide valve (20) and one control slide valve are provided.

9. Device according to Claim 7, characterised in that, with non-identical frictionally engaged elements, two pressure controllers (22, 23) and several multi-step and control slide valves (20, 21) are provided, in which arrangements the step faces of the multi-step slide valves (20), corresponding to the supporting torques at the frictionally engaged elements (8), and the control slide valves (21) are all constructed to be identical.

FIG.1

FIG.2

FIG.3

FIG.4